# EUROPEAN PATENT APPLICATION

(11) **EP 2 882 088 A1**
(43) Date of publication of application: **10.06.2015**
(21) Application number: 13196093.2
(22) Date of filing: 06.12.2013
(51) Int. Cl.: H02M 5/458, H02M 7/487

(54) **3-level inverter**

(71) Applicant: Siemens Aktiengesellschaft, 80333 München (DE)
(72) Inventor: Carter, Robert, Knutsford, Cheshire, WA16 8XU (GB)
(74) Representative: Maier, Daniel Oliver

(57) **Abstract**

The invention refers to a 3-level inverter connectable to an AC input circuit with a number of input phases, the inverter comprising:
- a number of AC input phase legs, matching at least the number of AC input phases,
- a rectifier bridge with a number of parallel rectifier phase legs, wherein each rectifier phase leg is connected to one of the number of AC input phase leg,
- a DC link connected in parallel to the rectifier bridge comprising two capacitances in series, and
- an output circuit comprising a number of 3-level output phase legs connected in parallel to the DC link, wherein each of the 3-level output phase legs comprises a number of switches and a number of diodes, and is connected to a load,
- wherein, during operation of the inverter, a midpoint of the DC link capacitances is connected to an electric reference potential of the AC input circuit.

## Description

The present invention relates to a 3-level inverter connectable to an AC input circuit and comprising a rectifier bridge, a DC link with two capacitances in series and a number of 3-level output phase legs in parallel, each one of which is connectable to a load.

In power electronics applications, pulse width modulation (PWM) inverter technology plays a key role due to their capability of producing AC voltages of variable magnitude as well as variable frequency. PWM inverters thus are very commonly used for motor drive loads with a need for adjustable speed where the motor load is supplied with either variable voltage or variable frequency.

A PWM inverter may have a single phase or a three phase output, and apart from a wide range of different inverter topologies, there are several different PWM techniques with different methods of implementation. The common goal of most inverter topologies and all PWM schemes is to generate an output voltage with, possibly after some filtering step, a sinusoidal voltage waveform of a desired frequency and magnitude. In many inverters, this goal is achieved by dividing a sine waveform into small samples, assigning each sample a duty cycle value, corresponding to for example the wave form's mean over the sample, and connecting the output circuit of the inverter to a fixed DC voltage supply, typically given by a capacitance, in either positive or negative direction of an inverter bridge according to the given duty cycle in each sample.

For a given operating frequency, deviations from a sinusoidal wave form are present as higher harmonic Fourier components, resulting in distortions. While many of the loads, for example motor wirings, have a significant inductance and, as a consequence, offer an inherent quality to suppress high frequency harmonic currents, the problem of harmonic distortion causing compatibility and power loss remains for lower harmonics.

As one solution to generate smoother wave forms, 3-level topologies have been introduced. Their main advantage compared to the technically simpler 2-level systems is that the sine wave does not need to resemble the duty cycles of one single voltage step. In a 3-level topology two voltage drops, typically at two capacitances in series which are assumed to be identical, are at hand to mimic the sine wave form through switching. The full voltage step never goes entirely to a load, but only half of the full voltage range at each PWM pulse is used. This results in better harmonic performance.

A 3-level topology of common use is the diode clamped architecture. An output phase leg in parallel to a DC link with two identical capacitances in series comprises four semiconductor switches in series, to each one of which a flyback diode is connected in anti parallel. The midpoint of the four switches can be connected to an AC load. The two inner switches are bridged via two serial flyback diodes in anti parallel. The midpoint of these two diodes is clamped to the midpoint of the DC link capacitances. While also a single phase AC operation is possible with this topology, a typical 3-level diode clamped inverter comprises three output phase legs.

A three phase 3-level diode clamped inverter, however, when connected to a three phase motor load, may cause excessive voltage oscillations on the floating DC link midpoint electric potential at integer multiples of three times the motor frequency. In order to prevent these unwanted oscillations, the DC link capacitances may be increased. However, midpoint electric potential may drift and this may lead to a higher voltage strain onto the semiconductor switches up to a possibly critical level. Furthermore, increasing the capacitances to suppress the oscillations mentioned leads to a poor mains harmonic performance and therefore to more losses of effective power due to distortion. However, these problems are not restricted to the diode clamped topology, but may also occur in other 3-level inverters.

The object of the present invention is to propose a 3-level inverter circuit which, using affordable components, prevents excessive oscillations as well as a drifting of the DC link midpoint electric potential while maintaining a good harmonics performance.

According to the present invention, this object is solved by a 3-level inverter connectable to an AC input circuit with a number of input phases, the inverter comprising:
- a number of AC input phase legs, matching at least the number of AC input phases,
- a rectifier bridge with a number of parallel rectifier phase legs, wherein each rectifier phase leg is connected to one of the number of AC input phase leg,
- a DC link connected in parallel to the rectifier bridge comprising two capacitances in series, and
- an output circuit comprising a number of 3-level output phase legs connected in parallel to the DC link, wherein each of the 3-level output phase legs comprises a number of switches and a number of diodes, and is connected to a load,
- wherein, during operation of the inverter, a midpoint of the DC link capacitances is connected to an electric reference potential of the AC input circuit.

The basic idea behind the invention is that in order to stabilise the electric potential at the DC link midpoint, any additional filtering device or any substantial change that is made at a single component of the architecture to prevent oscillations may have unwanted consequences in the resonant behaviour of the inverter as a whole. A possible increase in the pair of DC link capacitances to buffer the oscillations, for example in case of a 4 quadrant operating modus, may lead to a drift of the DC link midpoint electric potential. Likewise, the possible use of a filtering inductance in presence of the capacitances would add new eigenfrequencies to the harmonic spectrum.

It was realised that stabilizing the DC link midpoint electric potential can be achieved via a connection to a reference potential, and that this reference potential can be given by the AC input circuit. A possible reference potential defined in any way by a load would however lead to drawbacks as voltage drops in the circuits of the load, resulting in compatibility and even security issues. Hence, a reference potential should preferably not be established via a load. Instead, using a reference potential from the AC input circuit appears to be a solution. Where mains neutral connection is available, this can be used.

Such a connection, at first, seems to be contradictory to a person skilled in the art, since the reference potential now fixes the DC link midpoint electric potential without making the physical reasons for its initial oscillations disappear. Therefore, relatively large voltage fluctuations can be forced onto the two DC link capacitances, especially at high loads. Also, the nominal level of the DC link voltages may be increased, which can be of importance at lower loads when less charges are removed from the capacitances in every cycle. The large voltage fluctuations at high loads, however, may be met by using a responsive 3-level inverter modulator circuit which can react quickly enough to retain a sufficiently good output voltage control.

Moreover, the steady state voltage increase for lower loads might reach up as high as the peak level for high loads under the proper control mentioned, so that the nominal increase is not a significant problem to be dealt with regarding the semiconductor components of the inverter.

The connection of the DC link midpoint to an electric reference potential thus allows for the use of capacitors with relatively low capacitance, keeping the cost in a favourable range. The use of such "lean" capacitances may reduce mains current harmonic levels to the range of mandatory compatibility requirements. This in turn helps to reduce production costs while complying with existing legislation.

In another embodiment of the invention, the AC input circuit comprises a neutral point which is used as electric reference potential. The neutral point of the AC input circuit yields a particularly good reference potential due to the stability of the phase-against-neutral relation in any proper AC supply circuit.

In this sense, it is especially beneficial to use a three phase mains system as AC input circuit. The reference potential is then connected to the mains neutral. The usage of a three phase mains system as AC input circuit makes the inverter especially versatile due to the almost ubiquitous distribution of this mains system, to which the inverter then may just be plugged in.

It is of further advantage when the number of 3-level output phase legs is three. This allows for a usage of the inverter for a three phase load, as such loads are widespread especially in motor drive technology where each phase corresponds to a single coil wiring. The challenges surrounding the operation of three phase motor drives regarding compatibility and harmonic behaviour can be met particularly well by employing the presented inverter.

In another embodiment of particular avail, each 3-level output phase leg is a diode clamped phase leg, each one of which: comprising at least four switches and a diode bridge, clamped via the diode bridge to the midpoint of the DC link capacitances, and connectable to a load at the midpoint of its switches. Fluctuations of the DC link midpoint potential which may occur in a diode-clamped 3-level inverter can be suppressed especially efficiently by the present invention.

Preferably, each rectifier phase leg comprises two diodes in series wherein the connection of the corresponding AC input circuit phase leg to the rectifier phase leg is at the midpoint of two diodes. This provides a particularly easy way to rectify the AC input voltage.

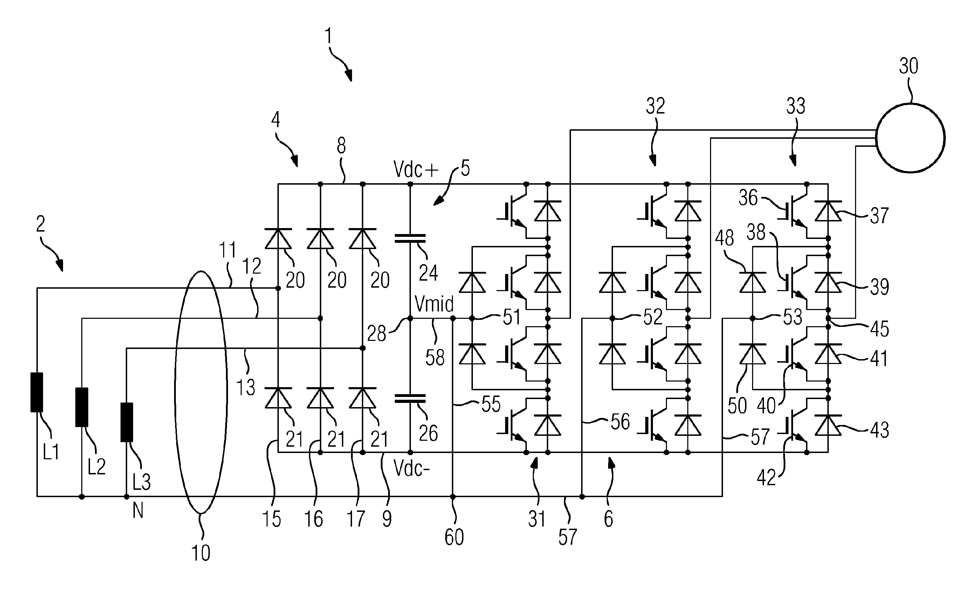

The attributes and properties as well as the advantages of the invention which have been described above are now illustrated with help of a drawing of an exemplary embodiment, where
- FIG 1: shows a diode clamped 3-level three phase inverter with an AC mains input circuit.

In FIG 1, an inverter 1 is shown. The inverter is connected to an AC input circuit 2 and comprises a rectifier bridge 4, a DC link 5 and an output circuit 6, all of which are connected in parallel through wires 8 and 9.

The AC input circuit 2 comprises three phases L1, L2, L3, and a neutral point N. The AC input circuit 2 is connected to the inverter 1 at an interface 10. At the interface 10, phase L1 from the AC input circuit 2 is connected to the AC input phase leg 11, phase L2 to the AC input phase leg 12, and phase L3 is connected to the AC input phase leg 13. The AC input phase leg 11, 12, 13 are connected to the parallel rectifier phase legs 15, 16, 17 of the rectifier bridge 4. Each rectifier phase leg 15, 16, 17 shows two diodes 20, 21 in series such that the connection point of each of the AC input phase legs 11, 12, 13 to the corresponding rectifier phase leg 15, 16, 17 lies between the two diodes 20, 21.

The DC link 5 features two capacitances 24, 26. Thus, at the DC link, there are three electrical potential levels, given by Vdc+ at wire 8, Vmid at the midpoint 28 of capacitances 24 and 26 and Vdc- at wire 9.

The output circuit 6 is connected to a three phase load 30 via three phase legs 31, 32, 33, which in turn are in parallel to the DC link 5 and the rectifier bridge 4 via wires 8 and 9. As all three phase legs 31, 32, 33 are identical in their respective topology, only phase leg 33 is described in more details. Leg 33 comprises four semiconductor switches 36, 38, 40, 42, to each one of which is clamped a flyback diode 37, 39, 41, 43 in anti parallel. The midpoint 45 between the four switches 36, 38, 40, 42 is connected to the load 30. The two inner switches 38, 40 are bridged by two diodes 48, 50 in series, while the midpoints 51, 52, 53 of the diode bridges of the three phase legs 31, 32, 33 are connected together through wires 55, 56, 57 and to the midpoint 28 of the DC link 5 via link 58.

In state of the art technology, wire 57 would end at the connection point 60 with wire 51. The present invention provides that wire 57 continues further to the interface 10, where it is connected according to the shown embodiment to the neutral point N of the AC input circuit 2.

The connection of the neutral point N to the midpoint 28 of the DC link 5 via the link 58 and wire 57 now pins the midpoint potential Vmid to the electric potential of the neutral point N, so the neutral point N of the AC input circuit 2 serves as electric reference potential. Thus, any oscillations in the DC link 5 which may for example be introduced by a generator operation of the load 30 via the output circuit's phase legs 31, 32, 33, now do not affect the midpoint potential Vmid anymore, but instead affect the potential Vdc+ at wire 8 and Vdc- at wire 9. In order to stabilize the voltage Vdc+ - Vmid at capacitance 24 and the voltage Vmid - Vdc- at capacitance 26, fast responsive modulation techniques for the switches 36, 38, 40, 42 in the output circuit may be applied.

## Claims

1. A 3-level inverter (1) connectable to an AC input circuit (2) with a number of input phases (L1, L2, L3), the inverter (1) comprising:
- a number of AC input phase legs (11, 12, 13), matching at least the number of AC input phases (L1, L2, L3),
- a rectifier bridge (4) with a number of parallel rectifier phase legs (15, 16, 17), wherein each rectifier phase leg (15, 16, 17) is connected to one of the number of AC input phase leg (11, 12, 13),
- a DC link (5) connected in parallel to the rectifier bridge (4) comprising two capacitances (24, 26) in series, and
- an output circuit (6) comprising a number of 3-level output phase legs (31, 32, 33) connected in parallel to the DC link (5), wherein each of the 3-level output phase legs (31, 32, 33) comprises a number of switches (36, 38, 40, 42) and a number of diodes (37, 39, 41, 43, 48, 50), and is connected to a load (30),
- wherein, during operation of the inverter (1), a midpoint (28) of the DC link capacitances (24, 26) is connected to an electric reference potential (N) of the AC input circuit (2).

2. The inverter (1) of claim 1, wherein
the AC input circuit (2) comprises a neutral point which is used as electric reference potential (N).

3. The inverter (1) of claim 2, wherein
the AC input circuit (2) is a three phase mains system.

4. The inverter (1) according to any of the preceding claims, wherein
the number of 3-level output phase legs (31, 32, 33) is three.

5. The inverter (1) according to any of the preceding claims, wherein
each 3-level output phase leg (31, 32, 33) is a diode clamped phase leg, wherein each of the diode clamped phase legs comprises at least four switches (36, 38, 40, 42) and a diode bridge (48, 50), is clamped via the diode bridge (48, 50) to the midpoint (28) of the DC link capacitances (24, 26), and is connected to a load (30) at the midpoint (45) of its switches (36, 38, 40, 42).

6. The inverter (1) according to any of the preceding claims, wherein
each rectifier phase leg (15, 16, 17) comprises two diodes (20, 21) in series, wherein the connection of the corresponding AC input phase leg (11, 12, 13) is at the midpoint of two diodes (20, 21) of the rectifier phase leg (15, 16, 17).
